# EUROPEAN PATENT SPECIFICATION

(11) **EP 2 666 650 B1**
(45) Date of publication and mention of the grant of the patent: **31.05.2017**
(21) Application number: 12193366.7
(22) Date of filing: 20.11.2012
(51) Int. Cl.: B60C 19/12, B60C 9/00, B60C 13/00

(54) **Tire**
Reifen
Pneu

(30) Priority: 23.05.2012 TW 101118379
(43) Date of publication of application: 27.11.2013
(73) Proprietor: Kenda Rubber Ind. Co., Ltd., 510 Yuanlin Township (TW)
(72) Inventor: Yang, Ying-Ming, 510 Yuanlin Township (TW); Yang, Chien-Hsin, 510 Yuanlin Township (TW); Lai, Tsung-Yueh, 510 Yuanlin Township (TW); Lai, Chih-Hsin, 510 Yuanlin Township (TW)
(74) Representative: Viering, Jentschura & Partner mbB Patent- und Rechtsanwälte

(56) References cited:
- EP-A1- 1 384 601
- EP-A2- 0 106 838
- DE-U1- 20 321 311
- DE-U1- 29 611 719
- US-A- 4 249 587

## Description

### BACKGROUND OF THE INVENTION

### 1. Field of the Invention

The present invention relates generally to a tire, and more particularly to a tire, which is light-weight, puncture proof, and airtight.

### 2. Description of the Related Art

In conventional tires, they are coated with a coating on an inner side hereof to keep the tire pressure. However, sometime the coating is broken because the coating is coated unevenly or is deteriorated by temperature, or the tire is punctured or cut.

An earlier invention of the present inventor, which is published as Taiwan utility model patent M383501, taught a bicycle tire which provides two protective layers to replace the coating. The first protective layer is on a surface portion and sidewalls of the tire, and the second protective layer is on beads of the tire. A combination of the first and the second protective layers may avoid the loss of tire pressure. Each protective layer has reinforced powder to provide high puncture proof, cut proof, and wear proof. The invention further taught a rubber crown, which is in contact with road, on the first protective layer to protect the first protective layer.

And now, we improve our earlier invention to provide a new tire with good puncture proof and airtight.

### SUMMARY OF THE INVENTION

The objective of the present invention is to provide a tire, which is light-weight, puncture proof, and airtight.

According to the objective of the present invention, a tire includes all the features of claim 1.

Therefore, the tire of the present invention has a good airtight condition and a light weight.

### BRIEF DESCRIPTION OF THE DRAWINGS

FIG. 1 is a sectional view of an embodiment corresponding to the prior art;
FIG. 2 is a sectional view of a first preferred embodiment of the present invention;
FIG. 3 is a sectional view of a second preferred embodiment of the present invention; and
FIG. 4 is a sectional view of an embodiment not corresponding to the present invention.

### DETAILED DESCRIPTION OF THE INVENTION

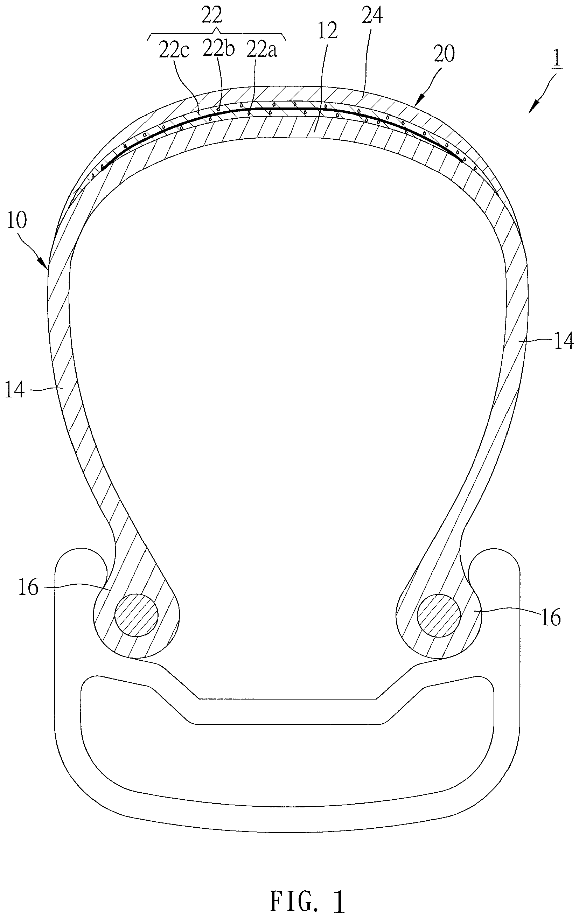

As shown in FIG. 1, a tire 1 includes a tire body 10 and a crown 20.

The tire body 10 is the main frame of the tire 1 which includes a surface portion 12, two sidewalls 14 on opposite sides of the surface portion 12, and two beads 16 respectively on distal ends of the sidewalls 14. The surface portion 12 will be deformed by pressure on the tire. In the present embodiment, the tire body is made of Kevlar yarns and rubber composite material, and a density of the Kevlar yarns is between 9 yarns per square centimeters (60 yarns per square inches) and 47 yarns per square centimeters (300 yarns per square inches).

The crown 20 is attached on an outer side of the surface portion 12 of the tire body 10, and includes a surface portion protective layer 22 and a skin layer 24.

The surface portion protective layer 22 is made of a composite material, including a body ply 22a, reinforced powder 22b, and rubber 22c. The surface portion protective layer 22 is attached to an outer side of the surface portion 12. The body ply 22a is an interlacing member and is inflexible to provide the crown 20 a strong structure. In the present embodiment, the body ply 22a is made of interwoven bullet-proof yarns, and an interweaving density of which is between 12x12 yarns per square centimeters (30×30 yarns per square inches) and 59x59 yarns per square centimeters (120×120 yarns per square inches). The bullet-proof yarns may be aromatic polyamide yarns (so called Kevlar yarns) or ultra high molecular weight polyethylene yarns (so called Dyneema yarns). A combination of the bullet-proof yarns and the rubber provides the surface portion protective layer 22 a high airtight performance. In practice, nylon and the equivalent material may be selected for the body ply 22a.

The reinforced powder 22b may be selected from bullet-proof ceramics powder, carbon fiber powder, hollow glass beads, glass fiber powder, or Kevlar powder. In the present embodiment, bullet-proof ceramics powder is selected. The reinforced powder 22b may increase the strength of the surface portion protective layer 22 to provide good puncture proof, cut proof, and wear proof.

The skin layer 24 is made of rubber, and is attached to an outer side of the surface portion protective layer 22. In the present embodiment, the skin layer 24 covers the entire surface portion protective layer 22. The skin layer 24 may choose rubber with various densities according to the function of the tire 1. Take off-road bicycle for example, low density rubber is selected for the skin layer 24 to provide the tire a high traction, and the tire for on-road bicycle is preferred a skin layer made of high density rubber.

In the tire 1, the crown 20 is provided on the surface portion 12 of the tire body 10 where the tire 1 has the greatest deformation and the highest risk to be punctured. The surface portion protective layer 22 of the crown 20 may keep the tire pressure. The reinforced powder 22b of the surface portion protective layer 22 provides the tire 1 good puncture proof, cut proof, and wear proof. The surface portion protective layer 22 is covered by the skin layer 24 so that the surface portion protective layer 22 may be made thinner to reduce the weight of the tire 1.

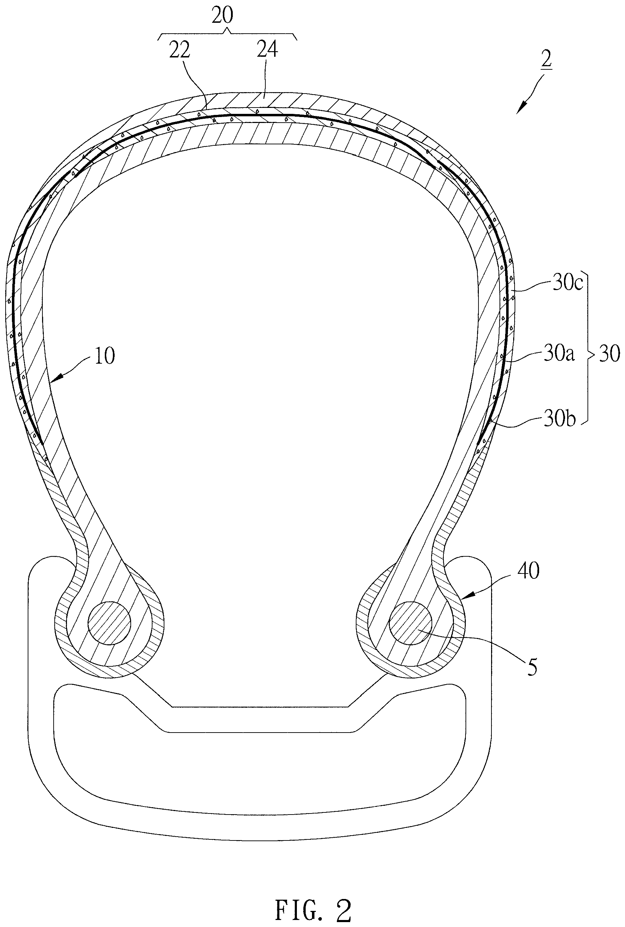

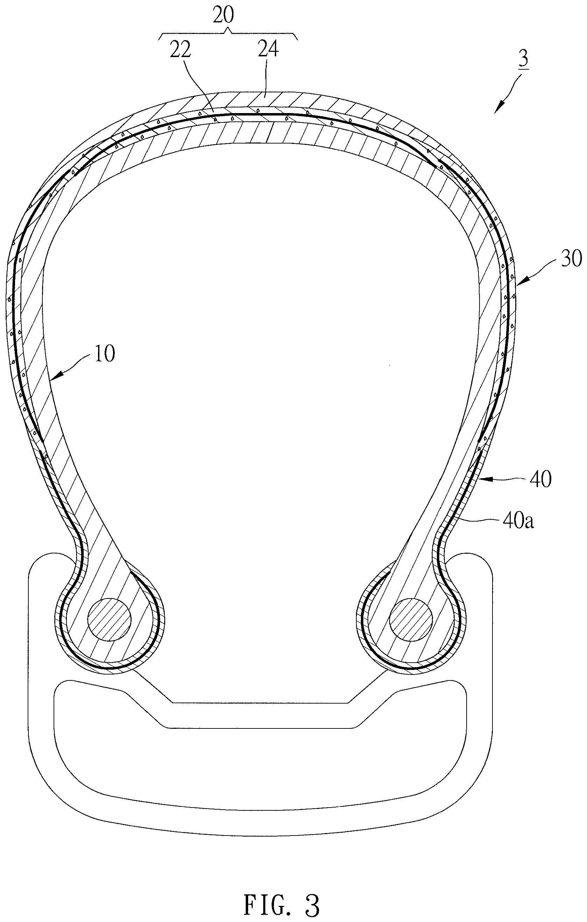

FIG. 2 shows a tire 2 of the first preferred embodiment of the present invention which further includes two sidewall protective layers 30 and two bead protective layers 40 respectively attached to the sidewalls and the beads of the tire body 10. Similar to the surface portion protective layer 22 of the crown 20, the sidewall protective layers 30 are made of a composite material, including an interlacing body ply 30a, reinforced powder 30b, and rubber 30c to protect the sidewalls of the tire 2. The bead protective layers 40 mainly are made of rubber to protect the beads of the tire 2. FIG. 3 shows a tire 3 of the third preferred embodiment of the present invention in which each bead protective layer 40 is provided with an interlacing body ply 40a therein to enhance a wear resistance of a rim flange 5.

The surface portion protective layer 22, the sidewall protective layers 30, and the bead protective layers 40 as shown in FIG. 2 and FIG. 3 each has a portion overlapping each other for airtight purpose. The sidewall protective layers 30 and the bead protective layers 40 increase a little bit weight of the tire, however, the sidewalls and the beads may be thinner consequently, and therefore, the total weight of the tire still is reduced.

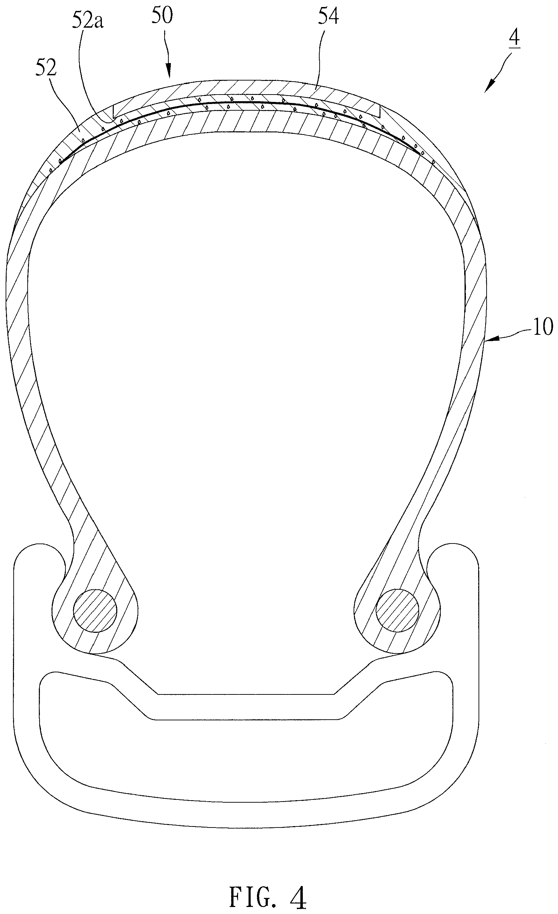

FIG. 4 shows a tire 4 which has a crown 50 with a surface portion protective layer 52 and a skin layer 54 as above. The different part is that the surface portion protective layer 52 has a recess 52a on an outer side thereof, and the skin layer 54 is a rubber block received and fixed in the recess 52a. In this embodiment, the skin layer 54 still is the part of the tire in contact with road. The tread protect layer 52 and the skin layer 54 are made of different materials so that the weight of the tire still is reduced by choosing a suitable combination of the tread protect layer 52 and the skin layer 54.

## Claims

1. A tire (1), comprising:
a tire body (10) having a surface portion (12), two sidewalls (14) on opposite sides of the surface portion (12), and two beads (16) on distal ends of the sidewalls (14); and
a crown (20) having a surface portion protective layer (22) provided on an outer side of the surface portion (12) of the tire body (10) and a skin layer (24) provided on the surface portion protective layer (22), **characterized in that** the surface portion protective layer (22) is made of a composite material including a body ply (22a), reinforced powder (22b) and rubber (22c); and is only provided on the outer side of the surface portion (12);
the tire further comprises two sidewall protective layers (30) provided on the sidewalls (14) of the tire body (10), wherein each of the sidewall protective layers (30) has at least a portion overlapping the surface portion protective layer (22).

2. The tire (1) as defined in claim 1, wherein the body ply (22a) is inflexible.

3. The tire (1) as defined in claim 1, wherein the body ply (22a) is made of interwoven yarns, and an interweaving density thereof is between 12x12 yarns per square centimeters (30×30 yarns per square inches) and 59×59 yarns per square centimeters (120x120 yarns per square inches).

4. The tire (1) as defined in claim 3, wherein the yarns are bullet-proof yarns.

5. The tire (1) as defined in claim 4, wherein the bullet-proof yarns are aromatic polyamide yarns or ultra high molecular weight polyethylene yarns.

6. The tire (1) as defined in claim 3, wherein the yarns are made of nylon.

7. The tire (1) as defined in claim 1, wherein the reinforced powder (22b) is selected from a group consisting of bullet-proof ceramics powder, carbon fiber powder, hollow glass beads, glass fiber powder, and Kevlar powder.

8. The tire (2) as defined in claim 1, wherein the sidewall protective layers (30) are made of a composite material including a body ply (30a), reinforced powder (30b) and rubber (30c).

9. The tire (2) as defined in claim 1, further comprising two bead protective layers (40) provided on the beads (16) of the tire body (10), wherein the bead protective layers (40) are made of a composite material including rubber, and the bead protective layers (40) respectively have at least a portion overlapping the sidewall protective layers (30).

10. The tire as defined in claim 9, wherein the bead protective layers (40) has an interlacing body ply (40a) therein.

## Patentansprüche

1. Reifen (1), umfassend:
einen Reifenkörper (10) mit einem Oberflächenabschnitt (12), zwei auf gegenüberliegenden Seiten des Oberflächenabschnitts (12) angeordnete Seitenwände (14) und zwei an distalen Enden der Seitenwände (14) angeordnete Wülste (16); und
eine Krone (20) mit einer an einer Außenseite des Oberflächenabschnitts (12) des Reifenkörpers (10) angeordneten Oberflächenabschnitt-Schutzschicht (22) und einer an der Oberflächenabschnitt-Schutzschicht (22) ausgebildeten Deckschicht (24), **dadurch gekennzeichnet, dass** die Oberflächenabschnitt-Schutzschicht (22) aus einem Verbundwerkstoff, der eine Körperlage (22a), Verstärkungspulver (22b) und Gummi (22c) umfasst, ausgebildet ist und nur auf der Außenseite des Oberflächenabschnitts (12) ausgebildet ist; wobei
der Reifen ferner zwei an den Seitenwänden (14) des Reifenkörpers (10) ausgebildete Seitenwandschutzschichten (30) umfasst, wobei jede der Seitenwandschutzschichten (30) zumindest einen die Oberflächenabschnitt-Schutzschicht (22) überlappenden Abschnitt aufweist.

2. Reifen (1) nach Anspruch 1, wobei die Körperlage (22a) unflexibel ist.

3. Reifen (1) nach Anspruch 1, wobei die Körperlage (22a) aus miteinander verwobenen Garnen hergestellt ist und eine verwobene Fadendichte davon zwischen 12x12 Fäden pro Quadratzentimeter (30x30 Fäden pro Quadratzoll) und 59x59 Fäden pro Quadratzentimeter (120x120 Fäden pro Quadratinch) beträgt.

4. Reifen (1) nach Anspruch 3, wobei die Garne kugelsichere Garne sind.

5. Reifen (1) nach Anspruch 4, wobei die kugelsicheren Garne aromatische Polyamidgarne oder ultrahochmolekulare Polyethylengarne sind.

6. Reifen (1) nach Anspruch 3, wobei die Garne aus Nylon hergestellt sind.

7. Reifen (1) nach Anspruch 1, wobei das Verstärkungspulver (22b) aus einer Gruppe ausgewählt ist, die aus kugelsicheren Keramikpulver, Kohlefaserpulver, hohlen Glaskugeln, Glasfaserpulver und Kevlarpulver besteht.

8. Reifen (2) nach Anspruch 1, wobei die Seitenwandschutzschichten (30) aus einem Verbundwerkstoff mit einer Körperlage (30a), verstärktem Pulver (30b) und Gummi (30c) hergestellt sind.

9. Reifen (2) nach Anspruch 1, ferner umfassend zwei an den Wülsten (16) des Reifenkörpers (10) ausgebildete Wulstschutzschichten (40), wobei die Wulstschutzschichten (40) aus einem Verbundwerkstoff hergestellt sind, das Gummi umfasst und die Wulstschutzschichten (40) jeweils mindestens einen die Seitenwandschutzschichten (30) überlappenden Abschnitt aufweisen.

10. Reifen nach Anspruch 9, wobei die Wulstschutzschichten (40) eine darin ineinandergreifende Körperlage (40a) aufweisen.

## Revendications

1. Pneu (1), comprenant :
une carcasse de pneu (10) qui présente une partie surface (12), deux flancs (14) situés sur les côtés opposés de la partie surface (12), et deux talons (16) situés sur les extrémités distales des flancs (14) ; et
un sommet (20) qui présente une couche de protection de la partie surface (22) disposée sur un côté extérieur de la partie surface (12) de la carcasse de pneu (10), et une couche de peau (24) disposée sur la couche de protection de la partie surface (22), **caractérisé en ce que** la couche de protection de la partie surface (22) est réalisée dans un matériau composite qui comprend une nappe carcasse (22a), une poudre renforcée (22b) et du caoutchouc (22c), et **en ce qu'**elle est seulement disposée sur le côté extérieur de la partie surface (12) ;
le pneu comprend en outre deux couches de protection de flanc (30) disposées sur les flancs (14) de la carcasse de pneu (10), dans lequel chacune des couches de protection de flanc (30) présente une partie au moins qui chevauche la couche de protection de la partie surface (22).

2. Pneu (1) selon la revendication 1, dans lequel la nappe carcasse (22a) est rigide.

3. Pneu (1) selon la revendication 1, dans lequel la nappe carcasse (22a) est constituée de fils entrelacés, et leur densité d'entrelacement est comprise entre 12 × 12 fils par centimètres carrés (30 × 30 fils par pouces carrés) et 59 × 59 fils par centimètres carrés (120 × 120 fils par pouces carrés).

4. Pneu (1) selon la revendication 3, dans lequel les fils sont des fils à l'épreuve des balles.

5. Pneu (1) selon la revendication 4, dans lequel les fils à l'épreuve des balles sont des fils de polyamide aromatique ou des fils de polyéthylène à poids moléculaire ultra élevé.

6. Pneu (1) selon la revendication 3, dans lequel les fils sont des fils réalisés en nylon.

7. Pneu (1) selon la revendication 1, dans lequel la poudre renforcée (22b) est sélectionnée dans le groupe constitué par une poudre de céramique à l'épreuve des balles, une poudre de fibres de carbone, des billes de verre creuses, de la poudre de fibres de verre, et de la poudre de Kevlar.

8. Pneu (2) selon la revendication 1, dans lequel les couches de protection de flanc (30) sont réalisées dans un matériau composite qui comprend une nappe carcasse (30a), une poudre renforcée (30b) et du caoutchouc (30c).

9. Pneu (2) selon la revendication 1, comprenant en outre deux couches de protection de talon (40) disposées sur les talons (16) de la carcasse de pneu (10), dans lequel les couches de protection de talon (40) sont réalisées dans un matériau composite qui comprend du caoutchouc, et les couches de protection de talon (40) présentent respectivement une partie au moins qui chevauche les couches de protection de flanc (30).

10. Pneu selon la revendication 9, dans lequel les couches de protection de talon (40) présentent à l'intérieur une nappe carcasse entrelacée (40a).
